# EUROPÄISCHE PATENTSCHRIFT

(11) **EP 1 811 790 B1**
(45) Veröffentlichungstag und Bekanntmachung des Hinweises auf die Patenterteilung: **22.06.2011**
(21) Anmeldenummer: 06001468.5
(22) Anmeldetag: 24.01.2006
(51) Int. Cl.: H04Q 3/00

(54) **Behandlung von SS7-Signalisierungsnachrichten in einem Signaling Transfer Point**
Processing of SS7 signalling messages in a signalling transfer point
Traitement de messages de signalisation SS7 dans un point de transfert de signaux

(43) Veröffentlichungstag der Anmeldung: 25.07.2007
(73) Patentinhaber: Nokia Siemens Networks GmbH & Co. KG, 81541 München (DE)
(72) Erfinder: Angermayr, Manfred, 86529 Schrobenhausen (DE); Schwarzbauer, Hanns Jürgen, Dr., 82194 Gröbenzell (DE)

(56) Entgegenhaltungen:
- US-A- 6 167 129
- US-A1- 2002 054 674
- US-A1- 2003 189 941
- US-B1- 6 735 441

## Beschreibung

Die vorliegende Erfindung bezieht sich auf die Verarbeitung von SS7 Nachrichten in einem Signaling Transfer Point. Insbesondere betrifft die Erfindung ein Verfahren zur Bearbeitung von Signalisierungsnachrichten, einen verbesserten STP und eine verbesserte Netzwerkanordnung, die ermöglichen, daß bei der Einführung neuartiger Netzwerkfunktionen oder Netzwerkapplikationen nur wenige Netzelemente anzupassen sind.

Moderne Kommunikationsnetze transportieren üblicherweise zwei Arten von Verkehr bzw. Daten. Die erste Art ist der Verkehr, welcher von Nutzern oder Teilnehmern gesendet oder empfangen wird und dessen Übertragung häufig dem Nutzer oder Teilnehmer in Rechnung gestellt wird. Dieser Verkehr wird auch als Nutzerverkehr, Nutzerdaten oder Teilnehmerverkehr bezeichnet. Die zweite Art ist jener Verkehr, der durch das Netzwerkmanagement verursacht und häufig als Managementverkehr bezeichnet wird.

Auf dem Gebiet der Telekommunikation wird der Managementverkehr auch als Signalisierungsverkehr bezeichnet. Dabei bezieht sich der Begriff "Signalisierung" auf den Austausch von Signalisierungsnachrichten zwischen verschiedenen Netzelementen wie Datenbankservern, Ortsvermittlungsstellen, Transitvermittlungsstellen und Nutzerendgeräten. Ein weitläufig bekanntes Protokoll zum Übertragen solcher Signalisierungsinformationen ist das Signaling System 7 (SS7), mitunter auch als Zentrales Zeichengabesystem Nr. 7 (ZZS7) oder Common Channel Signaling System 7 (CCS7) bezeichnet.

Das Signaling System 7 ist durch die International Telecommunication Union (ITU) in der Standardserie Q.7xx standardisiert und erfüllt alle Signalisierungsanforderungen heutiger Telekommunikationsnetze.

Das Signaling System 7 bildet dabei ein unabhängiges Netzwerk, in welchem SS7-Nachrichten zwischen den Netzelementen über bidirektionale Kanäle ausgetauscht werden, welche als Links bezeichnet werden. Die Signalisierung erfolgt außerhalb des (Sprach)-Bandes (out-of-band) und nicht innerhalb des Bandes (in-band) auf Kanälen, die den Nutzerdaten (z.B. Sprache) vorbehalten sind. Dies ermöglicht neben schnelleren Verbindungsaufbauzeiten eine Reihe von Funktionen, beispielsweise Intelligent Network (IN) Dienste, die im Signalisierungsnetz ablaufen können, ohne daß parallele Nutzdatenverbindungen aufgebaut werden müssen.

Die Elemente eines SS7-Netzwerks sind als Signaling Points bekannt, die durch einen Signaling Point Code (SPC) eindeutig identifiziert werden. Diese Point Codes werden in den Signalisierungsnachrichten zwischen Signaling Points übertragen und bezeichnen jeweils die Quelle und das Ziel einer Nachricht. Jeder Signaling Point nutzt eine Routingtabelle zum Auswahl eines geeigneten Signalisierungswegs für jede Nachricht.

Es werden 3 Typen von Signaling Points in SS7 Netzwerken underschieden: Service Switching Points (SSPs), Signaling Transfer Points (STPs) und Service Control Points (SCPs).

SSPs sind Vermittlungsstellen, von denen Verbindungen ausgehen, bei denen Verbindungen enden oder die als Durchgangsvermittlungsstellen (häufig als sog. Tandems) Verbindungen weiterreichen. Ein SSP sendet Signalisierungsnachrichten an andere SSPs zum Aufbau, Managen und Abbau von (Sprach)Kreisen, die für eine Verbindung benötigt werden. Ein SSP ist außerdem in der Lage, Anfragen an zentralisierte Datenbanken (SCPs) zu stellen, um zu bestimmen, wie eine Verbindung zu routen ist (beispielsweise bei gebührenfreien Verbindungen). Ein SCP sendet eine Antwort an den anfragenden SSP, welche die sogenannte Routing Number enthält, die mit der gewählten Nummer assoziiert ist.

Netzwerkverkehr zwischen Signaling Points kann über Signaling Transfer Points (STPs) geleitet werden. Ein STP leitet jede eingehende Nachricht basierend auf der in der SS7-Nachricht enthaltenen Routing-Information an einen ausgehenden Signalisierungslink weiter. Da ein STP als zentraler Netzknoten a-giert, liefert er eine verbesserte Ausnutzung des SS7-Netzwerks, indem er das Erfordernis direkter Links zwischen Signaling Points beseitigt. Ein STP kann die sogenannte Global Title Translation ausführen, eine Prozedur, durch welche das Ziel aus den Nummer-Digits ermittelt wird, die in der Signalisierungsnachricht enthalten sind (z.B. die gerufene gebührenfreie Nummer, die Nummer einer Calling Card oder die ID eines Mobiltelefonnutzers MSIN).

Das Signaling System 7 nutzt einen Protokollstack, in welchem die Hardware- und Softwarefunktionen des SS7-Protokolls in funktionale Abstraktionen unterteilt werden, die Level bzw. Ebenen genannt werden. Diese Level lassen sich mit einigen Einschränkungen auf das Open Systems Interconnect (OSI) 7-Layer-Modell bzw. Schichtenmodell der International Standards Organization (ISO) abbilden.

Die unteren drei Level werden Message Transfer Part (MTP) genannt. MTP Level 1 definiert die physikalischen, elektrischen und funktionalen Eigenschaften des digitalen Signaling Link. MTP Level 2 sichert die korrekte Ende-zu-Ende-Übertragung einer Nachricht über einen Signaling Link. MTP Level 3 liefert das Routing von Nachrichten zwischen Signaling Points des SS7-Netzes.

Funktionen werden bei SS7 durch sogenannte User Parts bereitgestellt. Ein häufig genutzter User Part ist der ISDN User Part (ISUP), welcher das Protokoll definiert, das zum Belegen, Verwalten und Freigeben von Leitungen genutzt wird, welche den Nutzerverkehr zwischen Vermittlungsstellen transportieren (z.B. zwischen dem Anrufer und dem Angerufenen). In einigen Ländern wird der weniger leistungsfähige Telephone User Part (TUP) anstelle des ISUP genutzt.

US 2003/189941 A1 betrifft einen erweiterten STP, der Point Codes im Rahmen der Signalisierung verändert. Dabei wird ein Szenario beschrieben, anhand dessen Nachrichten zwischen Vermittlungsstellen ausgetauscht werden über einen Signalprozessor, der eine Konvertierung der Signalisierung vornimmt, wobei diese Konvertierung für die Vermittlungsstellen transparent ist.

Ein weiteres SS7-Protokoll, der Signaling Connection Control Part (SCCP), liefert verbindungslose und verbindungsorientierte Netzwerkdienste und die Global Title Translation (GTT) oberhalb des MTP Level 3. Der SCCP wird als Transportebene für TCAP-basierte Dienste verwendet.

Der Transaction Capabilities Applications Part (TCAP) unterstützt den Austausch nicht-sprachkreisbezogener Daten zwischen Applikationen im SS7-Netzwerk unter Verwendung des verbindungslosen SCCP. Anfragen und Antworten, die zwischen SSPs und SCPs ausgetauscht werden, werden in TCAP-NaChrichteri transportiert. In Mobilkommunikationsnetzen transportiert der TCAP Nachrichten des Mobile Applikation Part (MAP), die zwischen Mobilvermittlungsstellen und Datenbanken ausgetauscht werden, um die Nutzerauthentifizierung, die Geräteidentifikation und das Roaming der Teilnehmer zu unterstützten.

Alle User Parts nutzen in klassischen Telekommunikationsnetzen den MTP Level 3 zum Nachrichtentransport, wobei sich der MTP Level 3 seinerseits auf die Level 2 und 1 stützt, um den Transport zu leisten sowie das Linkmanagement durchzuführen.

Nachteilig ist jedoch, daß die Einführung neuartiger Netzwerkfunktionen oder Netzwerkapplikationen stets die Anpassung praktisch aller SSPs erfordert.

Es ist daher eine Aufgabe der vorliegenden Erfindung, ein verfahren zur Bearbeitung von Signalisierungsnachrichten, einen verbesserten STP und eine verbesserte Netzwerkanordnung anzugeben, die ermöglichen, daß bei der Einführung neuartiger Netzwerkfunktionen oder Netzwerkapplikationen nur wenige Netzelemente anzupassen sind.

Im Sinne der vorliegenden Erfindung werden unter dem Begriff "Signaling End Point Funktionen" solche Funktionen verstanden, die Level 4 Informationen auswerten. In herkömmlichen SS7 Netzen sind diese typischerweise in Signaling End Points oder in Signaling Relay Points implementiert oder werden von Knoten dieser Art gesteuert.

Vorteilhaft wird die Feststellung, ob eine Signalisierungsnachricht mit einstellbaren Kriterien übereinstimmt, anhand einer Auswertung von MTP und/oder SCCP Parametern der Signalisierungsnachricht getroffen. Die folgende Liste führt einige mögliche Parameter auf, sie ist jedoch nicht als vollständig zu betrachten:
- Origination Point Code OPC;
- Destination Point Code DPC;
- Service Indicator SI;
- Message Type; und/oder
- Global Title.

Ferner kann zusätzlich oder alternativ der ankommende und/oder abgehende Link und/oder das ankommende und/oder abgehende Link Set der Signalisierungsnachricht ausgewertet werden.

Diese Aufgabe wird gelöst durch ein Verfahren zur Bearbeitung von SS7-Signalisierungsnachrichten in einem Signaling Transfer Point, welches sich durch folgende Schritte auszeichnet:
- Feststellen, ob eine Signalisierungsnachricht mit einstellbaren Kriterien übereinstimmt; und
- Ausführen von Signaling End Point Funktionen für diese Signalisierungsnachricht
   durch den Signaling Transfer Point selbst, wobei in einem ersten Trigger Punkt für eine empfangene SS7 Nachricht festgestellt wird, dass eine Übereinstimmung mit den Kriterien vorliegt und entsprechend den einstellbaren Kriterien die Nachricht unter Umgehung der eigentlichen Message Discrimination Funktion an eine Level 4 Funktion des Signaling Transfer Points weitergeleitet wird oder
   durch ein bezüglich des Signaling Transfer Point externes, ursprünglich nicht durch die Signalisierungsnachricht adressiertes Element welches Signaling End Point Funktionen liefert, falls eine Übereinstimmung vorliegt, wobei die Nachricht unmittelbar, d.h. unter Umgehung der eigentlichen Message Discrimination Funktion, an die Message Routing Funktion des Signalling Transfer Points, weitergeleitet wird, welche die Nachricht an das externes Element weiterleitet.

In einer ersten Ausgestaltung werden nach dem Feststellen, ob eine Signalisierungsnachricht mit einstellbaren Kriterien übereinstimmt, die Signaling End Point Funktionen für die Signalisierungsnachricht ausgeführt, indem folgende Schritte ausgeführt werden:
- Duplizieren der Signalisierungsnachricht;
- Weiterleiten eines Exemplars der Signalisierungsnachricht an eine Routingfunktion des Signaling Transfer Point zur Weiterleitung an das in der Signalisierungsnachricht adressierte Ziel;
- Weiterleiten des anderen Exemplars der Signalisierungsnachricht an eine Signaling End Point Komponente des Signaling Transfer Point oder an das externe Element zum Ausführen der Signaling End Point Funktionen; und
- Verwerfen des anderen Exemplars der Signalisierungsnachricht nach Bearbeitung durch die Signaling End Point Komponente oder das externe Element.

In einer zweiten Ausgestaltung werden nach dem Feststellen, ob eine Signalisierungsnachricht mit einstellbaren Kriterien übereinstimmt, die Signaling End Point Funktionen für die Signalisierungsnachricht ausgeführt, indem folgende Schritte ausgeführt werden:
- Weiterleiten der Signalisierungsnachricht an eine Signaling End Point Komponente des Signaling Transfer Point oder an das externe Element und Ausführen der Signaling End Point Funktionen;
- Zurückleiten der durch die Signaling End Point Komponente oder das externe Element bearbeiteten Signalisierungsnachricht an den Signaling Transfer Point zum erneuten Feststellen, ob die bearbeitete Signalisierungsnachricht mit einstellbaren Kriterien übereinstimmt, mit der Maßgabe, die bereits ausgeführten Signaling End Point Funktionen nicht erneut auszuführen; und
- Weiterleiten der bearbeiteten Signalisierungsnachricht an das in der Signalisierungsnachricht ursprünglich adressierte Ziel, falls keine erneute Übereinstimmung festgestellt wird.

Mit anderen Worten kann vorgesehen werden, daß als Teil der Signaling End Point Funktion die Signalisierungsnachricht so modifiziert wird, daß diese nach dem Zurückleiten zum Signaling Transfer Point nun ein anderes der einstellbaren Kriterien erfüllt, woraufhin erneut Signaling End Point Funktionen mit dieser Signalisierungsnachricht ausgeführt werden können.

Die Erfindung betrifft ferner einen Signaling Transfer Point zum Ausführen des erfindungsgemäßen Verfahrens sowie eine Netzwerkanordnung umfassend einen derartigen Signaling Transfer Point.

Ein Vorteil der Erfindung ist darin zu sehen, daß sie die Einführung von Diensten in einem Signaling Transfer Point bzw. unter der Steuerung eines Signaling Transfer Point ermöglicht. In einem Telekommunikationsnetz bedeutet dies, daß diese Dienste in nur wenigen, zentralen Netzelementen unterstützt werden müssen und nicht netzweit in allen SSPs/SCPs.

Im folgenden werden Ausführungsbeispiele der Erfindung mit Bezug auf zwei Figuren näher erläutert.
Fig. 1 zeigt in schematischer Darstellung eine erste Implementierung der Erfindung zum Einsatz in einem STP.
Fig. 2 zeigt in schematischer Darstellung eine zweite Implementierung der Erfindung zum Einsatz in einem STP.

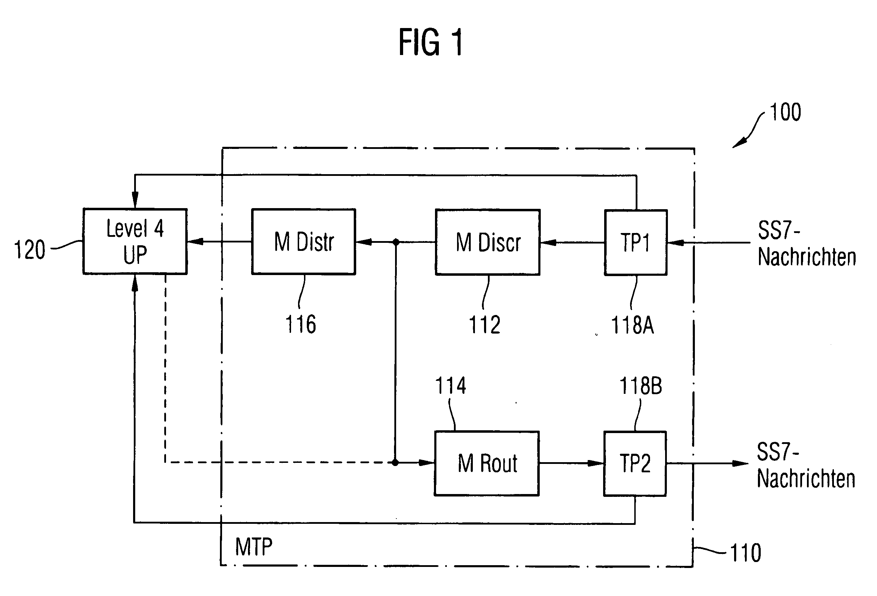

Fig. 1 zeigt einen Ausschnitt der Message Handling Funktionen eines STP 100 in Übereinstimmung mit der vorliegenden Erfindung. Eingehende SS7 Nachrichten werden durch die MTP Funktion 110 des STP 100 empfangen und verarbeitet. Wie in herkömmlichen STPs werden die SS7 Nachrichten an eine Message Discrimination Funktion 112 geliefert. Diese entscheidet, ob eine Verarbeitung einer gegebenen SS7 Nachricht durch einen lokalen MTP User Part erforderlich ist. Falls ja, wird diese SS7 Nachricht über eine Message Distribution Funktion 116 an eine verfügbare Level 4 (oder User Part) Funktion 120 weitergeleitet und anschließend einer Message Routing Funktion 114 übergeben, welche die Nachricht dann auf einem zum ursprünglich adressierten Ziel führenden Link und/oder Link Set weiterleitet. Falls keine Verarbeitung durch einen lokalen MTP User Part erforderlich ist, wird die Nachricht direkt der Message Routing Funktion 114 zur Weiterleitung auf einem zum ursprünglich adressierten Ziel führenden Link und/oder Link Set übergeben.

Gemäß der vorliegenden Erfindung wird zumindest ein Trigger Punkt (TP) 118 in den Nachrichtenfluß vom/zum STP 100 eingebracht, beispielsweise ein erster Trigger Punkt TP1 118A vor der Message Discrimination Funktion 112 und/oder ein zweiter Trigger Punkt TP2 118B nach der Message Routing Funktion 114.

Ein Trigger Punkt 118 ist dabei vorzugsweise eine in Hardware oder Software realisierte Einheit vergleichsweise geringer Komplexität, welche die durchgeleiteten SS7 Nachrichten schnell auf Übereinstimmung mit (i.d.R.) wenigen Kriterien überprüfen kann und somit die Bearbeitung von nicht die Kriterien erfüllenden SS7 Nachrichten nicht oder nur unwesentlich verzögert.

Grundsätzlich sind alle in einer SS7 Nachricht transportierten Parameter für die Überprüfung durch den Trigger Punkt 118 auswählbar. Als besonders geeignet angesehen werden die folgenden Parameter des MTP und/oder SCCP:
- Origination Point Code OPC;
- Destination Point Code DPC;
- Service Indicator SI;
- Message Type; und/oder
- Global Title.

Ferner kann zusätzlich oder alternativ der ankommende und/oder abgehende Link und/oder das ankommende und/oder abgehende Link Set der Signalisierungsnachricht als Kriterium gewählt werden.

Wird der der Message Discrimination Funktion 112 vorgelagerte, erste Trigger Punkt 118A genutzt, um eingehende SS7 Nachrichten auf die Übereinstimmung mit Kriterien zu überprüfen und fallweise einer besonderen Behandlung zuzuführen, kann der im folgenden beispielhaft beschriebene Ablauf zur Anwendung kommen.

Im ersten Trigger Punkt 118A wird für eine empfangene SS7 Nachricht festgestellt, daß eine Übereinstimmung mit den Trigger-Kriterien vorliegt. Entsprechend den eingestellten Trigger-Kriterien kann die Nachricht unter Umgehung der eigentlichen Message Discrimination Funktion 112 an eine geeignete Level 4 (oder User Part) Funktion 120 weitergeleitet werden, d.h., auch Nachrichten, die nicht mittels DPC an den STP 100 selbst adressiert sind, können somit durch eine Level 4 (oder User Part) Funktion 120 des STP 100 bearbeitet werden.

Ferner kann vorteilhaft eine Level 4 Funktion 120 oder ein Bündel von Level 4 Funktionen vorgesehen werden, die über die klassischen Level 4 Funktionen eines STP hinausgeht. Beispiele für derart erweiterte Level 4 Funktionen sind:
- SCCP Screening, d.h., Verwerfen von SCCP Nachrichten anhand bestimmter SCCP Parameter oder SCCP Parameterkombinationen;
- ISUP Screening, d.h., Verwerfen von ISUP Nachrichten anhand bestimmter ISUP Parameter oder ISUP Parameterkombinationen;
- ISUP Unterstützung für Number Portability, indem die Rufnummer in der ISUP Nachricht modifiziert bzw. mit einem Prefix versehen wird;
- Accounting für SCCP und/oder ISUP, d.h. Sammeln von ISUP bzw. SCCP basierten Abrechnungsdaten;
- Statistiken und/oder Monitoring.

Nach Bearbeitung der SS7 Nachricht durch die Level 4 Funktion 120 kann vorgesehen werden, daß die (ggf. veränderte) SS7 Nachricht der Message Routing Funktion 114 zur Weiterleitung an das ursprüngliche oder ein aktualisiertes Ziel übergeben wird. Alternativ kann vorgesehen werden, daß die SS7 Nachricht nach Bearbeitung verworfen wird, etwa weil die im STP stellvertretend für das eigentliche Nachrichtenziel ausgeführte Funktion vollständig ausgeführt werden konnte, oder es wird eine komplett neue SS7 Nachricht zur Vervollständigung der Funktionsausführung erzeugt.

Anstelle des Umlenkens der SS7 Nachricht durch den Trigger Punkt 118A kann auch vorgesehen werden, daß die SS7 Nachricht durch den Trigger Punkt 118A dupliziert wird. In diesem Fall wird je eine Kopie der Nachricht der Message Discrimination Funktion 112 und der geeigneten Level 4 Applikation 120 zur Bearbeitung übergeben, wobei dann durch die Level 4 Applikation sichergestellt werden muß, daß im Ergebnis nicht zwei SS7 Nachrichten gleichen Inhalts im Netzwerk zirkulieren.

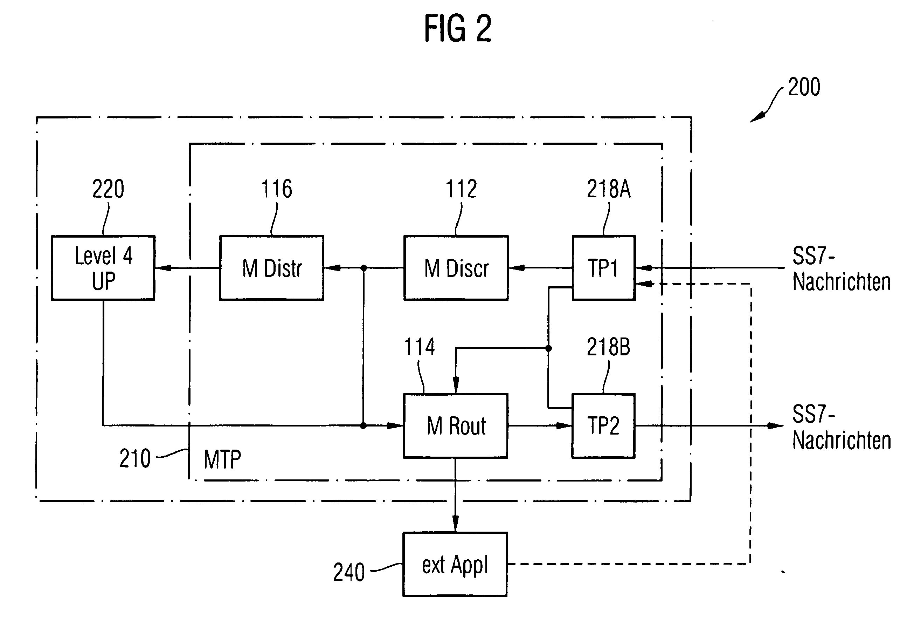

Anstelle der Integration der Level 4 Funktion in den STP 100 kann auch vorgesehen werden, die Bearbeitung der den Trigger-Kriterien genügenden SS7 Nachrichten in eine oder mehrere externe Applikation(en) zu verlagern. Ein entsprechendes Ausführungsbeispiel der Erfindung ist schematisch in Fig. 2 dargestellt. Ein STP 200 gemäß eines weiteren Ausführungsbeispiels der Erfindung umfaßt eine MTP Funktion 210, welche wiederum die Message Discrimination Funktion 112, die Message Distribution Funktion 116 und die Message Routing Funktion 114 aufweist. Zwei mögliche Trigger Punkte 218A, 218B sind dargestellt, wobei ein erster Trigger Punkt 218A an einem Eingang der MTP Funktion 210 angeordnet ist und ein zweiter Trigger Punkt 218B an einem Ausgang der MTP Funktion 210. Vorzugsweise wird nur einer dieser Trigger Punkte 218 benötigt.

Die Trigger Punkte 218 arbeiten im Wesentlichen wie die Trigger Punkte 118 aus Fig. 1, mit dem Unterschied, daß die SS7 Nachrichten, die den Kriterien entsprechen, oder die Duplikate solcher Nachrichten, ein neues Nachrichtenziel erhalten und unmittelbar an die Message Routing Funktion 114 weitergeleitet werden, welche die SS7 Nachrichten dann anhand der Adresse an eine externe Applikation bzw. ein externes Element 240 weiterleitet. Die externe Applikation kann dabei vorteilhaft mittels herkömmlicher SS7 Adressierung adressiert werden, d.h., die den Kriterien entsprechenden Nachrichten oder ihre Duplikate erhalten im Trigger Punkt 218 den Destination Point Code (DPC) des externen Elements 240, bei dem es sich beispielsweise um einen Applikationsserver handeln kann.

Die Definition des externen Elements 240 als gesonderter SS7 Knoten mit eigenem SS7 Point Code sowie die Verwendung der Message Routing Funktion 114 des STP zum Erreichen dieses externen Elements 210 ist dabei besonders vorteilhaft, da einerseits in den Trigger Punkten 218 nur die Adresse der externen Applikation 240 administriert und gespeichert werden muß und die SS7 Nachrichten oder deren Duplikaten dann "automatisch" unter Nutzung der ohnehin vorhandenen Funktionen ihren Weg zum externen Element 240 finden, und da andererseits mehrere STPs 200 die in einem externen Element 240 implementierten Applikationen gemeinsam nutzen können.

Es sei darauf hingewiesen, daß falls die Abarbeitung der gemäß der Kriterien ausgewählten SS7 Nachrichten extern erfolgt, vorteilhaft eine interne Level 4 Funktion 220 vorgesehen werden kann, die der üblichen Level 4 Funktion eines herkömmlichen STP entspricht.

Wie bereits angedeutet kann auch im Ausführungsbeispiel der Fig. 2 vorgesehen werden, daß der erste Trigger Point 218A die Nachricht an das externe Element 240 umlenkt und diese dann ggf. zur Weiterleitung an das eigentliche Ziel an den STP 200 zurückgeleitet wird (gestrichelte Verbindung). In diesem Fall kann durch geeignete Kennzeichen, z.B. Parameter, in der erneut in den STP 200 eingespeisten Nachricht sichergestellt werden, daß der erste Trigger Point 218A diese Nachricht nicht erneut zur gleichen externen Applikation leitet. Diese Kennzeichen können durch den Trigger Point 218A oder durch die externe Applikation in die Nachricht eingefügt werden.

Alternativ kann auch im Ausführungsbeispiel der Fig. 2 vorgesehen werden, daß der erste Trigger Point 218A die SS7 Nachricht an das externe Element 240 dupliziert und ein Exemplar dieser SS7 Nachricht durch eine im externen Element 240 implementierte externe Applikation bearbeitet und anschließend verworfen wird und das andere Exemplar in den herkömmlichen Message Handling Prozeß des STP 200 eingespeist wird.

Beim Umlenken der Nachricht durch den Trigger Point 218A an das externe Element 240 geht das ursprüngliche Routing Label der eingehenden und umgelenkten SS7 Nachricht verloren. Falls dieses für die spätere Behandlung im STP 200 (nachdem die Nachricht vom externen Element 240 erneut in den STP 200 eingespeist wurde) benötigt wird, bietet es sich an, das Routing Label z.B. wie folgt zu "retten":
- Anstelle des Austauschs des DPC in der Nachricht wird die ursprüngliche SS7 unverändert in eine neue SS7 Nachricht verpackt, die dann an das externe Element 240 adressiert wird. Dabei kann allerdings der Fall eintreten, daß die neue SS7 Nachricht die maximal erlaubte Länge überschreitet. In einem solchen Fall kann dann vorgesehen werden, daß die Kommunikation mit der externen Applikation 240 gemäß ITU-T Q.2210 / MTP-3b mit größeren maximalen Nachrichtenlängen erfolgt. Alternativ kann die ursprüngliche SS7 Nachricht auf zwei neue SS7 Nachrichten aufgeteilt, an die externe Applikation übertragen und dort wieder zusammengesetzt werden.
- Dem ersten Trigger Punkt 218A wird ein Speicher zugeordnet, in welchem Routing Labels umgelenkter SS7 Nachrichten gespeichert werden, wobei die SS7 Nachrichten ein eindeutiges Kennzeichen erhalten, welches durch die externe Applikation nicht beeinflußt wird, um beim erneuten Eintritt der SS7 Nachricht in den ersten Trigger Punkt das gespeicherte Routing Label wieder zuordnen zu können.

Die Erfindung ist nicht auf die beschriebenen Ausführungsbeispiele beschränkt. Es ist beispielsweise möglich, die mit Bezug auf Fig. 1 und Fig. 2 beschriebenen Ausführungsbeispiele so zu kombinieren, daß eine erste Applikation lokal gemäß Fig. 1 implementiert wird und eine zweite Applikation gemäß Fig. 2 in einem extern Element implementiert wird. Dies ist beispielsweise dann von Vorteil, wenn die erste Applikation nur isoliert in wenigen STPs benötigt wird, die zweite Applikation hingegen netzweit von mehreren STPs genutzt wird.

Ferner ist es möglich, den Trigger Punkt oder die Trigger Punkte an beliebigen Stellen im Message Handling Ablauf eines STP anzuordnen, beispielsweise anstelle vor der Message Discrimination Funktion 112 hinter dieser Funktion oder auch integriert in die Message Discrimination Funktion 112, beispielsweise um die in der Message Discrimination Funktion 112 implementierten Analysefunktionen für die Trigger Funktion zu nutzen und das mehrfache Implementierten solcher Basisfunktionen zu vermeiden. Selbstverständlich können mehrere Trigger Punkte innerhalb eines STP vorgesehen werden, um SS7 Nachrichten gezielt aus bestimmten Abarbeitungsphasen im STP Message Handling heraus an eine Funktion weiterzuleiten.

Die vorliegende Erfindung läßt sich vorteilhaft zum raschen und zentralen Einführen neuer Dienste in SS7-Netzen anwenden. Als Beispiele für solche Dienste seien angeführt:
- ENUM, wobei der STP 100, 200 in diesem Fall als "ENUM e-nabled Signaling Gateway" arbeitet und an eine ENUM Datenbank angebunden ist und die vorliegende Erfindung genutzt wird, ENUM Anfragen zu ermitteln und an diese Datenbank weiterzuleiten;
- SCCP Screening und Accounting, wobei dieses Screening und Accounting erfolgt, indem der Trigger Punkt 118 zu berücksichtigende SCCP Nachrichten durch Auswertung auf MTP Ebene ermittelt und zur anschließenden Auswertung aus der zeitkritischen Nachrichtenbehandlung des STP herausleitet;
- schnelle SMS Bearbeitung und Auslieferung, wobei durch die Erfindung SMS ermittelt werden, der STP bereits den ersten Zustellversuch einer SMS übernimmt und damit die SMS zunächst nicht im SMSC (short message service center) gespeichert werden muß, was das SMSC erheblich entlastet;
- EIR (equipment identification register) zur Überwachung von Mobiltelefondiebstählen, wobei die vorliegende Erfindung im STP 100, 200 genutzt wird, um EIR Funktionen zu liefern;
- Durchführen von Charging bzw. Vergebührung, indem mittels der vorliegenden Erfindung Charging-relevante Nachrichten durch den Trigger Punkt 118 im STP 100, 200 ermittelt und an eine STP-internen oder STP-externe Charging-Funktion, z.B. Datenbank, weitergeleitet werden; und/oder
- Tracing des MTP L3 Verkehrs zur Analyse und Verbesserung der MTP L3 Lastverteilung.

Die Erfindung ist nicht auf die beschriebenen Ausführungsbeispiele beschränkt, sondern kann auf beliebige andere Szenarien angewendet werden, in denen die Abarbeitung von Signaling Endpoint Funktionen in einem STP von Vorteil ist.

## Patentansprüche

1. Verfahren zur Bearbeitung von SS7-Signalisierungsnachrichten in einem Signaling Transfer Point (100, 200), **gekennzeichnet durch** folgende Schritte:
- Feststellen, ob eine Signalisierungsnachricht mit einstellbaren Kriterien übereinstimmt; und
- Ausführen von Signaling End Point Funktionen für diese Signalisierungsnachricht
- **durch** den Signaling Transfer Point selbst (100), wobei in einem ersten Trigger Punkt (118A) für eine empfangene SS7 Nachricht festgestellt wird, dass eine Übereinstimmung mit den Kriterien vorliegt und entsprechend den einstellbaren Kriterien die Nachricht unter Umgehung der eigentlichen Message Discrimination Funktion (112) an eine Level 4 Funktion (120) des Signaling Transfer Points (100) weitergeleitet wird oder
- **durch** ein bezüglich des Signaling Transfer Point (200) externes, ursprünglich nicht **durch** die Signalisierungsnachricht adressiertes Element (240), welches Signaling End Point Funktionen liefert, falls eine Übereinstimmung vorliegt, wobei die Nachricht unmittelbar, d.h. unter Umgehung der eigentlichen Message Discrimination Funktion (112), an die Message Routing Funktion (114) des Signalling Transfer Points (100), weitergeleitet wird, welche die Nachricht an das externes Element (240) weiterleitet.

2. verfahren nach Anspruch 1, bei dem die Signaling End Point Funktionen für die Signalisierungsnachricht durch das externe Gerät (240) ausgeführt werden, wobei ein Trigger-Punkt (218A, 218B) SS7-Signalisierungsnachrichten, die den Kriterien entsprechen, oder Duplikate solcher Nachrichten, an eine Message Routing Funktion (114) weiterleitet, die die SS7-Signalisierungsnachrichten anhand der Adresse an das externe Element (240) weiterleitet.

3. verfahren nach einem der vorhergehenden Ansprüche, bei dem das externe Element (240) mittels SS7-Adressierung adressiert wird.

4. Verfahren nach einem der vorhergehenden Ansprüche, bei dem das externe Element (240) ein Applikationsserver ist.

5. Verfahren nach einem der vorhergehenden Ansprüche, bei dem das externe Element (240) ein SS7-Knoten mit eigenem SS7 Point Code ist.

6. Verfahren nach einem der vorhergehenden Ansprüche, bei dem der Signaling Transfer Point (100, 200) eine MTP Funktion (110, 210) umfasst, wobei der erste Trigger Punkt (118A, 218A) am Eingang der MTP Funktion (110, 210) und ein zweiter Trigger Punkt (118B, 218B) am Ausgang der MTP Funktion (110, 210) vorgesehen ist.

7. Verfahren nach einem der vorhergehenden Ansprüche, bei dem der Schritt des Feststellens, ob eine Signalisierungsnachricht mit einstellbaren Kriterien übereinstimmt, MTP und/oder SCCP Parameter der Signalisierungsnachricht auswertet.

8. Verfahren nach einem der vorhergehenden Ansprüche, bei dem der Schritt des Feststellens, ob eine Signalisierungsnachricht mit einstellbaren Kriterien übereinstimmt, einen oder mehrere der folgenden MTP und/oder SCCP Parameter der Signalisierungsnachricht auswertet:
- Origination Point Code OPC;
- Destination Point Code DPC;
- Service Indicator SI;
- Message Type; und/oder
- Global Title.

9. Verfahren nach einem der vorhergehenden Ansprüche, bei dem der Schritt des Feststellens, ob eine Signalisierungsnachricht mit einstellbaren Kriterien übereinstimmt, den ankommenden und/oder abgehenden Link und/oder das ankommende und/oder abgehende Link Set der Signalisierungsnachricht auswertet.

10. Verfahren nach einem der vorhergehenden Ansprüche, bei dem der Schritt des Ausführens der Signaling End Point Funktionen für die Signalisierungsnachricht folgende Schritte aufweist:
- Duplizieren der Signalisierungsnachricht;
- Weiterleiten eines Exemplars der Signalisierungsnachricht an eine Routingfunktion des Signaling Transfer Point zur Weiterleitung an das in der Signalisierungsnachricht adressierte Ziel;
- Weiterleiten des anderen Exemplars der Signalisierungsnachricht an eine Signaling End Point Komponente (120) des Signaling Transfer Point oder an das externe Element (240) zum Ausführen der Signaling End Point Funktionen; und
- Verwerfen des anderen Exemplars der Signalisierungsnachricht nach Bearbeitung durch die Signaling End Point Komponente (120) oder das externe Element (240).

11. Verfahren nach einem der Ansprüche 1 bis 9, bei dem der Schritt des Ausführens der Signaling End Point Funktionen für die Signalisierungsnachricht folgende Schritte aufweist:
- weiterleiten der Signalisierungsnachricht an eine Signaling End Point Komponente (120) des Signaling Transfer Point oder an das externe Element (240) und Ausführen der Signaling End Point Funktionen;
- Zurückleiten der durch die Signaling End Point Komponente (120) oder das externe Element (240) bearbeiteten Signalisierungsnachricht an den Signaling Transfer Point (100, 200) zum erneuten Feststellen, ob die bearbeitete Signalisierungsnachricht mit einstellbaren Kriterien übereinstimmt, mit der Maßgabe, die bereits ausgeführten Signaling End Point Funktionen nicht erneut auszuführen; und
- Weiterleiten der bearbeiteten Signalisierungsnachricht an das in der Signalisierungsnachricht ursprünglich adressierte Ziel, falls keine erneute Übereinstimmung festgestellt wird.

12. Verfahren nach einem der vorhergehenden Ansprüche, bei dem die einstellbaren Kriterien so gewählt werden, dass Charging-relevante Signalisierungsnachrichten erfasst werden.

13. Signaling Transfer Point (100, 200) zur Bearbeitung von SS7-Signalisierungsnachrichten, der folgendes aufweist:
- Mittel zum Feststellen (118, 218), ob eine Signalisierungsnachricht mit einstellbaren Kriterien übereinstimmt; und
- Mittel zum Ausführen von Signaling End Point Funktionen für diese Signalisierungsnachricht, falls eine Übereinstimmung vorliegt
- durch den Signaling Transfer Point selbst (100), wobei in einem ersten Trigger Punkt (118A) für eine empfangene SS7 Nachricht festgestellt wird, dass eine Übereinstimmung mit den Kriterien vorliegt und entsprechend den einstellbaren Kriterien die Nachricht unter Umgehung der eigentlichen Message Discrimination Funktion (112) an eine Level 4 Funktion (120) des Signaling Transfer Points (100) weitergeleitet wird oder
- durch ein bezüglich des Signaling Transfer Point (200) externes, ursprünglich nicht durch die Signalisierungsnachricht adressiertes Element (240), welches Signaling End Point Funktionen liefert, falls eine Übereinstimmung vorliegt, wobei die Nachricht unmittelbar, d.h. unter Umgehung der eigentlichen Message Discrimination Funktion (112), an die Message Routing Funktion (114) des Signalling Transfer Points (100), weitergeleitet wird, welche die Nachricht an das extemes Element (240) weiterleitet.

14. Signaling Transfer Point nach Anspruch 13, bei dem ein Trigger-Punkt (218A, 218B) SS7-Signalisierungsnachrichten, die den Kriterien entsprechen, oder Duplikate solcher Nachrichten, an eine Message Routing Funktion (114) weiterleitet, die die SS7-Signalisierungsnachrichten anhand der Adresse an das externe Element (240) weiterleitet.

15. Signaling Transfer Point nach einem der Ansprüche 13 oder 14, bei dem das externe Element (240) mittels SS7-Adressierung adressiert wird.

16. Signaling Transfer Point nach einem der Ansprüche 13 bis 15, bei dem das externe Element (240) ein Applikationsserver ist.

17. Signaling Transfer Point nach einem der Ansprüche 13 bis 16, bei dem das externe Element (240) ein SS7-Knoten mit eigenem SS7 Point Code ist.

18. Signaling Transfer Point nach einem der Ansprüche 13 bis 17, bei dem der Signaling Transfer Point (100, 200) eine MTP Funktion (110, 210) umfasst, wobei ein erster Trigger Punkt (118A, 218A) am Eingang der MTP Funktion (110, 210) und ein zweiter Trigger Punkt (118B, 218B) am Ausgang der MTP Funktion (110, 210) vorgesehen ist.

19. Signaling Transfer Point nach einem der Ansprüche 13 bis 18, der anstelle der Mittel (120) zum Ausführen von Signaling End Point Funktionen Mittel (218) zum Auswählen eines externen, ursprünglich nicht durch die Signalisierungsnachricht adressierten Elements (240), welches Signaling End Point Funktionen liefert, sowie Mittel (218, 114) zum Weiterleiten der Signalisierungsnachricht an dieses externe Element (240), aufweist.

20. Signaling Transfer Point nach einem der Ansprüche 13 bis 19, dessen Mittel (118, 218) zum Feststellen, ob eine Signalisierungsnachricht mit einstellbaren Kriterien übereinstimmt, Mittel zum Auswerten von MTP und/oder SCCP Parametern der Signalisierungsnachricht umfassen.

21. Signaling Transfer Point nach einem der Ansprüche 13 bis 20, dessen Mittel (118, 218) zum Feststellen, ob eine Signalisierungsnachricht mit einstellbaren Kriterien übereinstimmt, Mittel zum Auswerten eines oder mehrerer der folgenden MTP und/oder SCCP Parameter der Signalisierungsnachricht aufweisen:
- Origination Point Code OPC;
- Destination Point Code DPC;
- Service Indicator SI;
- Message Type; und/oder
- Global Title.

22. Signaling Transfer Point nach einem der Ansprüche 13 bis 21, dessen Mittel (118, 218) zum Feststellen, ob eine Signalisierungsnachricht mit einstellbaren Kriterien übereinstimmt, den ankommenden und/oder abgehenden Link und/oder das ankommende und/oder abgehende Link Set der Signalisierungsnachricht auswerten.

23. Signaling Transfer Point nach einem der Ansprüche 13 bis 22, der ferner folgendes aufweist:
- Mittel (118, 218) zum Duplizieren der Signalisierungsnachricht;
- Mittel (118, 218) zum Weiterleiten eines Exemplars der signalisierungsnachricht an eine Routingfunktion (114) des Signaling Transfer Point zur Weiterleitung an das in der Signalisierungsnachricht ursprünglich adressierte Ziel;
- Mittel (118, 218, 114) zum Weiterleiten des anderen Exemplars der Signalisierungsnachricht an eine Signaling End Point Komponente (120) des Signaling Transfer Point oder an das externe Element (240) zum Ausführen der Signaling End Point Funktionen; und
- Mittel zum Verwerfen des anderen Exemplars der Signalisierungsnachricht nach Bearbeitung durch die Signaling End Point Komponente (120) oder das externe Element (240).

24. Signaling Transfer Point nach einem der Ansprüche 13 bis 23, der ferner folgendes aufweist:
- Mittel (118, 218, 114) zum Weiterleiten der Signalisierungsnachricht an eine Signaling End Point Komponente (120) des Signaling Transfer Point oder an das externe Element (240) und Ausführen der Signaling End Point Funktionen;
- Mittel zum Empfang der durch die Signaling End Point Komponente oder das externe Element bearbeiteten und an den Signaling Transfer Point (100, 200) zurückgeleiteten Signalisierungsnachricht;
- Mittel (118, 218) zum erneuten Feststellen, ob die bearbeitete Signalisierungsnachricht mit einstellbaren Kriterien übereinstimmt, mit der Maßgabe, die bereits ausgeführten Signaling End Point Funktionen nicht erneut auszuführen; und
- eine Routingfunktion (114) zum Weiterleiten der bearbeiteten Signalisierungsnachricht an das in der Signalisierungsnachricht ursprünglich adressierte Ziel, falls keine erneute Übereinstimmung festgestellt wird.

25. Signaling Transfer Point nach einem der Ansprüche 13 bis 24, dessen einstellbare Kriterien so gewählt werden, dass Charging-relevante Signalisierungsnachrichten erfasst werden.

26. Netzwerkanordnung eines Telekommunikationsnetzwerks, umfassend einen Signaling Transfer Point (100, 200) nach einem der Ansprüche 13 bis 25.

## Claims

1. Method for processing SS7 signalling messages at a signalling transfer point (100, 200), **characterized by** the following steps:
- determining whether a signalling message corresponds to adjustable criteria; and
- executing signalling end point functions for this signalling message
- by the signalling transfer point itself (100), wherein, at a first trigger point (118A) for a received SS7 message, it is determined that there is correspondence with the criteria and, in accordance with the adjustable criteria, the message is forwarded to a level 4 function (120) of the signalling transfer point (100), bypassing the actual message discrimination function (112), or
- by an element (240), originally not addressed by the signalling message, which element is external with respect to the signalling transfer point (200) and delivers signalling end point functions if there is correspondence, the message being forwarded directly, i.e. bypassing the actual message discrimination function (112) to the message routing function (114) of the signalling transfer point (100) which forwards the message to the external element (240).

2. Method according to Claim 1, in which the signalling end point functions for the signalling message are executed by the external device (240), wherein a trigger point (218A, 218B) forwards signalling messages which correspond to the criteria, or duplicates of such messages, to a message routing function (114) which forwards the SS7 signalling messages to the external element (240) by means of the address.

3. Method according to one of the preceding claims, in which the external element (240) is addressed by means of SS7 addressing.

4. Method according to one of the preceding claims, in which the external element (240) is an application server.

5. Method according to one of the preceding claims, in which the external element (240) is an SS7 node with its own SS7 point code.

6. Method according to one of the preceding claims, in which the signalling transfer point (100, 200) comprises an MTP function (110, 210), wherein the first trigger point (118A, 218A) is provided at the input of the MTP function (110, 210) and a second trigger point (118B, 218B) is provided at the output of the MTP function (110, 210).

7. Method according to one of the preceding claims, in which the step of determining whether a signalling message corresponds to adjustable criteria evaluates MTP and/or SCCP parameters of the signalling message.

8. Method according to one of the preceding claims, in which the step of determining whether a signalling message corresponds to adjustable criteria evaluates one or more of the following MTP and/or SCCP parameters of the signalling message:
- Origination Point Code OPC;
- Destination Point Code DPC;
- Service Indicator SI;
- Message Type; and/or
- Global Title.

9. Method according to one of the preceding claims, in which the step of determining whether a signalling message corresponds to adjustable criteria evaluates the incoming and/or outgoing link and/or the incoming and/or outgoing link set of the signalling message.

10. Method according to one of the preceding claims, in which the step of executing the signalling end point functions for the signalling message exhibits the following steps:
- duplicating the signalling message;
- forwarding a copy of the signalling message to a routing function of the signalling transfer point for forwarding to the destination addressed in the signalling message;
- forwarding the other copy of the signalling message to a signalling end point component (120) of the signalling transfer point or to the external element (240) for executing the signalling end point functions; and
- discarding the other copy of the signalling message after processing by the signalling end point component (120) or the external element (240).

11. Method according to one of Claims 1 to 9, in which the step of executing the signalling end point functions for the signalling message exhibits the following steps:
- forwarding the signalling message to a signalling end point component (120) of the signalling transfer point or to the external element (240) and executing the signalling end point functions;
- feeding the signalling message processed by the signalling end point component (120) or the external element (240) back to the signalling transfer point (100, 200) in order to determine again whether the processed signalling message corresponds to adjustable criteria, with the specification not to execute the previously executed signalling end point functions again; and
- forwarding the processed signalling message to the destination originally addressed in the signalling message if no new correspondence is determined.

12. Method according to one of the preceding claims, in which the adjustable criteria are selected in such a manner that charging-related signalling messages are detected.

13. Signalling transfer point (100, 200) for processing SS7 signalling messages, which exhibits the following:
- means for determining (118, 218) whether a signalling message corresponds to adjustable criteria; and
- means for executing signalling end point functions for this signalling message if there is correspondence
- by the signalling transfer point itself (100), wherein, at a first trigger point (118A) for a received SS7 message, it is determined that there is correspondence with the criteria and, in accordance with the adjustable criteria, the message is forwarded to a level 4 function (120) of the signalling transfer point (100), bypassing the actual message discrimination function (112), or
- by an element (240), originally not addressed by the signalling message, which element is external with respect to the signalling transfer point (200) and delivers signalling end point functions if there is correspondence, the message being forwarded directly, i.e. bypassing the actual message discrimination function (112) to the message routing function (114) of the signalling transfer point (100) which forwards the message to the external element (240).

14. Signalling transfer point according to Claim 13, in which a trigger point (218A, 218B) forwards SS7 signalling messages which correspond to the criteria, or duplicates of such messages, to a message routing function (114) which forwards the SS7 signalling messages to the external element (240) by means of the address.

15. Signalling transfer point according to either of Claims 13 and 14, in which the external element (240) is addressed by means of SS7 addressing.

16. Signalling transfer point according to one of Claims 13 to 15, in which the external element (240) is an application server.

17. Signalling transfer point according to one of Claims 13 to 16, in which the external element (240) is an SS7 node with its own SS7 point code.

18. Signalling transfer point according to one of Claims 13 to 17, in which the signalling transfer point (100, 200) comprises an MTP function (110, 210), wherein a first trigger point (118A, 218A) is provided at the input of the MTP function (110, 210) and a second trigger point (118B, 218B) is provided at the output of the MTP function (110, 210).

19. Signalling transfer point according to one of Claims 13 to 18, which, instead of the means (120) for executing signalling end point functions, exhibits means (218) for selecting an external element (240), originally not addressed by the signalling message, which element delivers signalling end point functions, and means (218, 114) for forwarding the signalling message to this external element (240).

20. Signalling transfer point according to one of Claims 13 to 19, the means (118, 218) of which for determining whether a signalling message corresponds to adjustable criteria comprise means for evaluating MTP and/or SCCP parameters of the signalling message.

21. Signalling transfer point according to one of Claims 13 to 20, the means (118, 218) of which for determining whether a signalling message corresponds to adjustable criteria exhibit means for evaluating one or more of the following MTP and/or SCCP parameters of the signalling message:
- Origination Point Code OPC;
- Destination Point Code DPC;
- Service Indicator SI;
- Message Type; and/or
- Global Title.

22. Signalling transfer point according to one of Claims 13 to 21, the means (118, 218) of which for determining whether a signalling message corresponds to adjustable criteria evaluate the incoming and/or outgoing link and/or the incoming and/or outgoing link set of the signalling message.

23. Signalling transfer point according to one of Claims 13 to 22, which, furthermore, exhibits the following:
- means (118, 218) for duplicating the signalling message;
- means (118, 218) for forwarding a copy of the signalling message to a routing function (114) of the signalling transfer point for forwarding to the destination originally addressed in the signalling message;
- means (118, 218, 114) for forwarding the other copy of the signalling message to a signalling end point component (120) of the signalling transfer point or to the external element (240) for executing the signalling end point functions; and
- means for discarding the other copy of the signalling message after processing by the signalling end point component (120) or the external element (240).

24. Signalling transfer point according to one of Claims 13 to 23, which, furthermore, exhibits the following:
- means (118, 218, 114) for forwarding the signalling message to a signalling end point component (120) of the signalling transfer point or to the external element (240) and executing the signalling end point functions;
- means for receiving the signalling message processed by the signalling end point component or the external element and fed back to the signalling transfer point (100, 200);
- means (118, 218) for determining again whether the processed signalling message corresponds to adjustable criteria, with the specification not to execute the previously executed signalling end point functions again; and
- a routing function (114) for forwarding the processed signalling message to the destination originally addressed in the signalling message, if no new correspondence is determined.

25. Signalling transfer point according to one of Claims 13 to 24, the adjustable criteria of which are selected in such a manner that charging-related signalling messages are detected.

26. Network arrangement of a telecommunication network comprising a signalling transfer point (100, 200) according to one of Claims 13 to 25.

## Revendications

1. Procédé de traitement de messages de signalisation SS7 dans un point de transfert de signalisation (100, 200), **caractérisé par** les étapes suivantes :
- vérifier si un message de signalisation correspond à des critères réglables ; et
- exécuter des fonctions de point terminal de signalisation pour ce message de signalisation
- par le point de transfert de signalisation (100) lui-même, auquel cas on constate dans un premier point de déclenchement (118A) pour un message SS7 reçu qu'il existe une correspondance avec les critères et conformément aux critères réglables on achemine le message, en contournant la fonction de discrimination de message (112) proprement dite, vers une fonction de niveau 4 (120) du point de transfert de signalisation (100), ou
- par un élément externe (240) par rapport au point de transfert de signalisation (200), initialement non adressé par le message de signalisation, lequel fournit des fonctions de point terminal de signalisation lorsqu'il existe une correspondance, auquel cas le message est acheminé directement, c'est-à-dire en contournant la fonction de discrimination de message (112) proprement dite, vers la fonction de routage de message (114) du point de transfert de signalisation (100), laquelle achemine le message vers l'élément externe (240).

2. Procédé selon la revendication 1, dans lequel les fonctions de point terminal de signalisation pour le message de signalisation sont exécutées par l'équipement externe (240), un point de déclenchement (218A, 218B) acheminant des messages de signalisation SS7 correspondant aux critères, ou des duplicatas de tels messages, vers une fonction de routage de message (114), laquelle achemine les messages de signalisation SS7 à l'aide de l'adresse vers l'élément externe (240).

3. Procédé selon l'une des revendications précédentes, dans lequel l'élément externe (240) est adressé par adressage SS7.

4. Procédé selon l'une des revendications précédentes, dans lequel l'élément externe (240) est un serveur d'application.

5. Procédé selon l'une des revendications précédentes, dans lequel l'élément externe (240) est un noeud SS7 ayant son propre code de point SS7.

6. Procédé selon l'une des revendications précédentes, dans lequel le point de transfert de signalisation (100, 200) comprend une fonction MTP (110, 210), le premier point de déclenchement (118A, 218A) étant prévu à l'entrée de la fonction MTP (110, 210) et un second point de déclenchement (118B, 218B) étant prévu à la sortie de la fonction MTP (110, 210).

7. Procédé selon l'une des revendications précédentes, dans lequel l'étape consistant à vérifier si un message de signalisation correspond à des critères réglables, évalue des paramètres MTP et/ou SCCP du message de signalisation.

8. Procédé selon l'une des revendications précédentes, dans lequel l'étape consistant à vérifier si un message de signalisation correspond à des critères réglables, évalue un ou plusieurs des paramètres MTP et/ou SCCP suivants du message de signalisation :
- code du point d'origine OPC ;
- code du point de destination DPC ;
- indicateur de service SI ;
- type de message ; et/ou
- appellation globale.

9. Procédé selon l'une des revendications précédentes, dans lequel l'étape consistant à vérifier si un message de signalisation correspond à des critères réglables évalue le lien entrant et/ou sortant et/ou l'ensemble des liens entrants et/ou sortants du message de signalisation.

10. Procédé selon l'une des revendications précédentes, dans lequel l'étape d'exécution des fonctions de point terminal de signalisation pour le message de signalisation comporte les étapes suivantes :
- dupliquer le message de signalisation ;
- acheminer un exemplaire du message de signalisation vers une fonction de routage du point de transfert de signalisation en vue de l'acheminement vers la destination adressée dans le message de signalisation ;
- acheminer l'autre exemplaire du message de signalisation vers un composant du point terminal de signalisation (120) du point de transfert de signalisation ou vers l'élément externe (240) en vue d'exécuter les fonctions de point terminal de signalisation ; et
- rejeter l'autre exemplaire du message de signalisation après traitement par le composant du point terminal de signalisation (120) ou l'élément externe (240).

11. Procédé selon l'une des revendications 1 à 9, dans lequel l'étape d'exécution des fonctions de point terminal de signalisation pour le message de signalisation comporte les étapes suivantes :
- acheminer le message de signalisation vers un composant du point terminal de signalisation (120) du point de transfert de signalisation ou vers l'élément externe (240) et exécuter les fonctions de point terminal de signalisation ;
- réacheminer le message de signalisation traité par le composant du point terminal de signalisation (120) ou l'élément externe (240) vers le point de transfert de signalisation (100, 200) pour vérifier de nouveau si le message de signalisation traité correspond à des critères réglables, avec l'ordre de ne pas exécuter de nouveau les fonctions de point terminal de signalisation déjà exécutées ; et
- acheminer le message de signalisation traité vers la destination initialement adressée dans le message de signalisation si aucune nouvelle correspondance n'est constatée.

12. Procédé selon l'une des revendications précédentes, dans lequel les critères réglables sont choisis de façon à détecter des messages de signalisation pertinents pour le chargement.

13. Point de transfert de signalisation (100, 200) destiné au traitement de messages de signalisation SS7, comprenant :
- des moyens (118, 218) destinés à vérifier si un message de signalisation correspond à des critères réglables ; et
- des moyens destinés à exécuter des fonctions de point terminal de signalisation pour ce message de signalisation lorsqu'il existe une correspondance
- par le point de transfert de signalisation (100) lui-même, auquel cas on constate dans un premier point de déclenchement (118A) pour un message SS7 reçu qu'il existe une correspondance avec les critères et conformément aux critères réglables on achemine le message, en contournant la fonction de discrimination de message (112) proprement dite, vers une fonction de niveau 4 (120) du point de transfert de signalisation (100), ou
- par un élément externe (240) par rapport au point de transfert de signalisation (200), initialement non adressé par le message de signalisation, lequel fournit des fonctions de point terminal de signalisation lorsqu'il existe une correspondance, auquel cas le message est acheminé directement, c'est-à-dire en contournant la fonction de discrimination de message (112) proprement dite, vers la fonction de routage de message (114) du point de transfert de signalisation (100), laquelle achemine le message vers l'élément externe (240).

14. Point de transfert de signalisation selon la revendication 13, dans lequel un point de déclenchement (218A, 218B) achemine des messages de signalisation SS7 correspondant aux critères, ou des duplicatas de tels messages, à une fonction de routage de message (114), laquelle achemine les messages de signalisation SS7 à l'aide de l'adresse vers l'élément externe (240).

15. Point de transfert de signalisation selon l'une des revendications 13 ou 14, dans lequel l'élément externe (240) est adressé par adressage SS7.

16. Point de transfert de signalisation selon l'une des revendications 13 à 15, dans lequel l'élément externe (240) est un serveur d'application.

17. Point de transfert de signalisation selon l'une des revendications 13 à 16, dans lequel l'élément externe (240) est un noeud SS7 ayant son propre code de point SS7.

18. Point de transfert de signalisation selon l'une des revendications 13 à 17, dans lequel le point de transfert de signalisation (100, 200) comprend une fonction MTP (110, 210), un premier point de déclenchement (118A, 218A) étant prévu à l'entrée de la fonction MTP (110, 210) et un second point de déclenchement (118B, 218B) étant prévu à la sortie de la fonction MTP (110, 210).

19. Point de transfert de signalisation selon l'une des revendications 13 à 18, comprenant à la place des moyens (120) destinés à exécuter des fonctions de point terminal de signalisation, des moyens (218) destinés à sélectionner un élément externe (240) initialement non adressé par le message de signalisation, lequel fournit des fonctions de point terminal de signalisation, ainsi que des moyens (218, 114) destinés à acheminer le message de signalisation à cet élément externe (240).

20. Point de transfert de signalisation selon l'une des revendications 13 à 19, dont les moyens (118, 218) destinés à vérifier si un message de signalisation correspond à des critères réglables, comprennent des moyens destinés à évaluer des paramètres MTP et/ou SCCP du message de signalisation.

21. Point de transfert de signalisation selon l'une des revendications 13 à 20, dont les moyens (118, 218) destinés à vérifier si un message de signalisation correspond à des critères réglables, comprennent des moyens destinés à évaluer un ou plusieurs des paramètres MTP et/ou SCCP suivants du message de signalisation :
- code du point d'origine OPC ;
- code du point de destination DPC ;
- indicateur de service SI ;
- type de message ; et/ou
- appellation globale.

22. Point de transfert de signalisation selon l'une des revendications 13 à 21, dont les moyens (118, 218) destinés à vérifier si un message de signalisation correspond à des critères réglables, évaluent le lien entrant et/ou sortant et/ou l'ensemble des liens entrants et/ou sortants du message de signalisation.

23. Point de transfert de signalisation selon l'une des revendications 13 à 22, comprenant en outre :
- des moyens (118, 218) destinés à dupliquer le message de signalisation ;
- des moyens (118, 218) destinés à acheminer un exemplaire du message de signalisation vers une fonction de routage (114) du point de transfert de signalisation en vue de l'acheminement vers la destination initialement adressée dans le message de signalisation ;
- des moyens (118, 218, 114) destinés à acheminer l'autre exemplaire du message de signalisation vers un composant du point terminal de signalisation (120) du point de transfert de signalisation ou vers l'élément externe (240) en vue d'exécuter les fonctions de point terminal de signalisation ; et
- des moyens destinés à rejeter l'autre exemplaire du message de signalisation après traitement par le composant du point terminal de signalisation (120) ou l'élément externe (240).

24. Point de transfert de signalisation selon l'une des revendications 13 à 23, comprenant en outre :
- des moyens (118, 218, 114) destinés à acheminer le message de signalisation vers un composant du point terminal de signalisation (120) du point de transfert de signalisation ou vers l'élément externe (240) et à exécuter les fonctions de point terminal de signalisation ;
- des moyens destinés à recevoir le message de signalisation traité par le composant du point terminal de signalisation ou l'élément externe et réacheminé vers le point de transfert de signalisation (100, 200);
- des moyens (118, 218) destinés à vérifier de nouveau si le message de signalisation traité correspond à des critères réglables, avec l'ordre de ne pas exécuter de nouveau les fonctions de point terminal de signalisation déjà exécutées ; et
- une fonction de routage (114) destinée à acheminer le message de signalisation traité vers la destination initialement adressée dans le message de signalisation si aucune nouvelle correspondance n'est constatée.

25. Point de transfert de signalisation selon l'une des revendications 13 à 24, dont les critères réglables sont choisis de façon à détecter des messages de signalisation pertinents pour le chargement.

26. Agencement de réseau d'un réseau de télécommunications, comprenant un point de transfert de signalisation (100, 200) selon l'une des revendications 13 à 25.
